# EUROPEAN PATENT SPECIFICATION

(11) **EP 1 486 280 B1**
(45) Date of publication and mention of the grant of the patent: **06.06.2007**
(21) Application number: 04006062.6
(22) Date of filing: 15.03.2004
(51) Int. Cl.: B23C 3/35

(54) **Clamping device for duplicating machines for keys of special bit type**
Spannvorrichtung für Schlüsselkopiermaschinen für Schlüssel mit besonderen Bärten
Dispositif de serrage pour les machines à copier des clés à panneton spécial

(30) Priority: 10.06.2003 IT VE20030009 U
(43) Date of publication of application: 15.12.2004
(73) Proprietor: SILCA S.p.A., 31029 Vittorio Veneto (IT)
(72) Inventor: Da Rodda, Oreste, 31020 Revine Lago (IT)
(74) Representative: Piovesana, Paolo

(56) References cited:
- EP-A- 0 362 007
- FR-A- 2 117 833
- FR-A- 2 356 476
- GB-A- 2 171 620
- IT-B- 1 248 861

## Description

The present invention relates to a clamping device for duplicating machines for keys of special bit type according to the preamble of claim 1. Such a clamping device is known from IT 1 248 861 B.

Special keys are known for safety locks provided in the interior of the keyhole with a movable diaphragm.

A known type of key comprises substantially a shank provided at one end with an operating head and at the other end with a bit consisting of a parallelepiped plate comprising on its major surfaces a notch with its axis transverse to the axis of the shank, and a plurality of grooves with their axis substantially parallel to the axis of the shank.

An object of the invention is to provide a clamping device for duplicating machines for keys of this type.

Another object of the invention is to provide a clamping device which enables the duplicating machine to effect easy and comfortable duplication.

These and other objects which will be apparent from the ensuing description are attained according to the invention by a clamping device for machines for duplicating keys of special bit type, as described in claim 1.

The invention is further clarified hereinafter with reference to the accompanying drawings, in which:

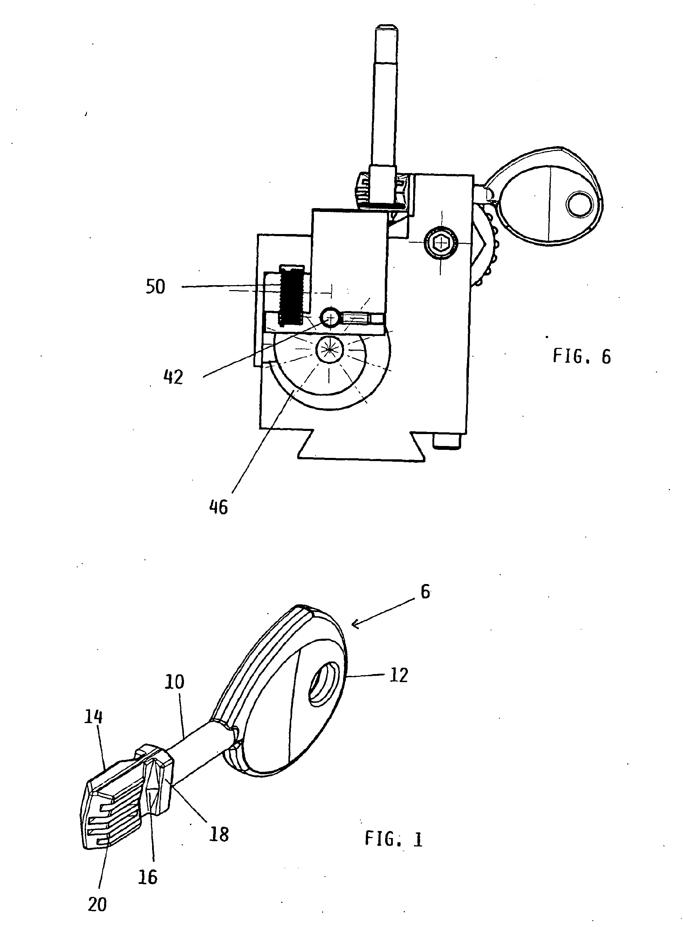

- Figure 1: is a perspective view of the key to be duplicated,

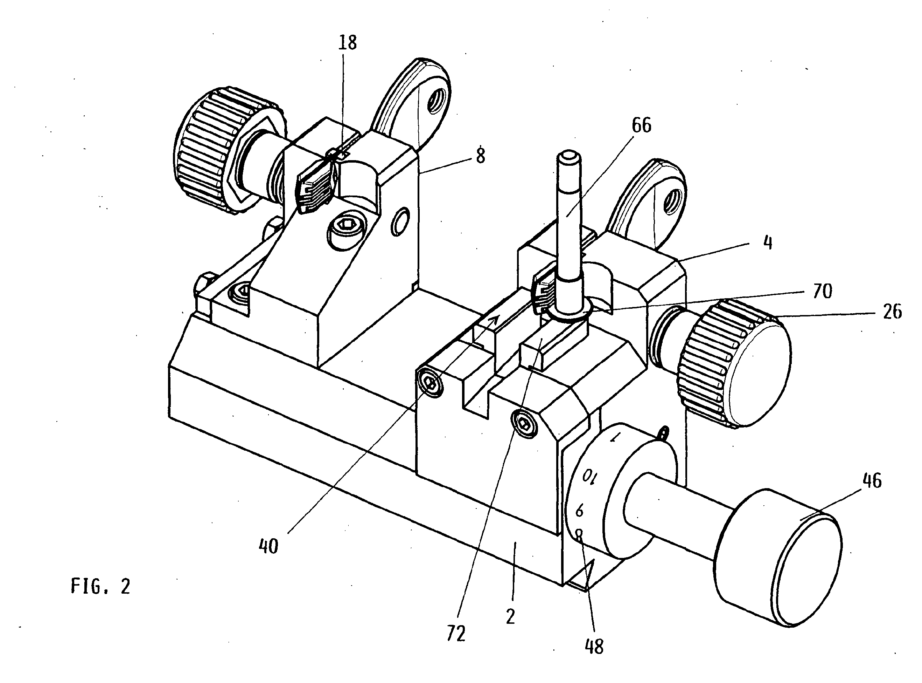

- Figure 2: is a perspective view of the clamping device according to the invention,

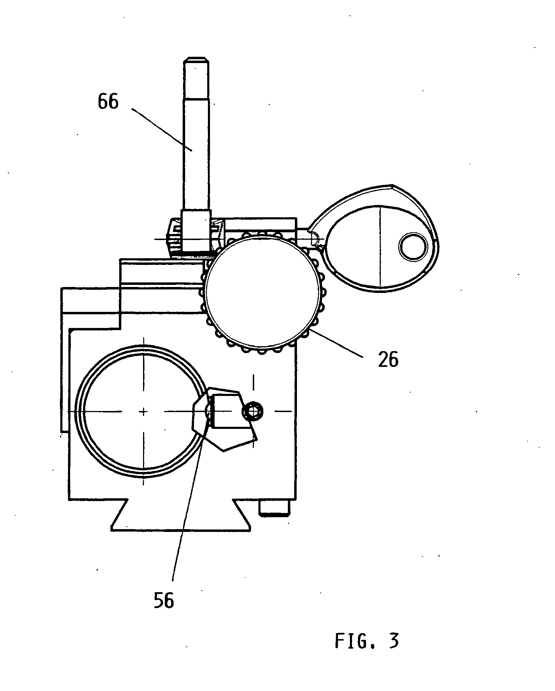

- Figure 3: is a side view thereof,

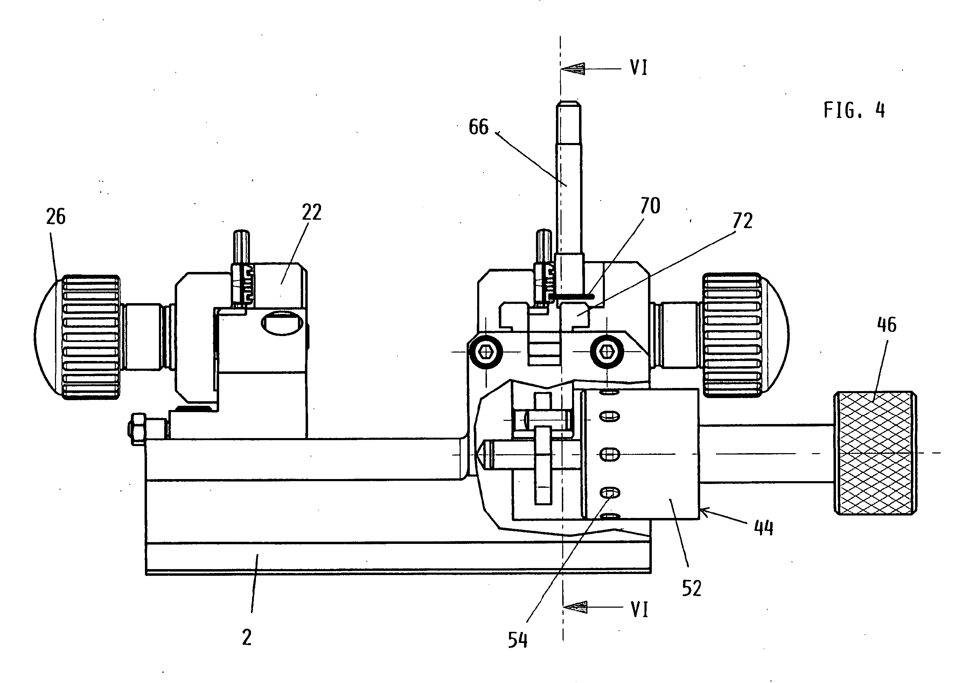

- Figure 4: is a front view thereof,

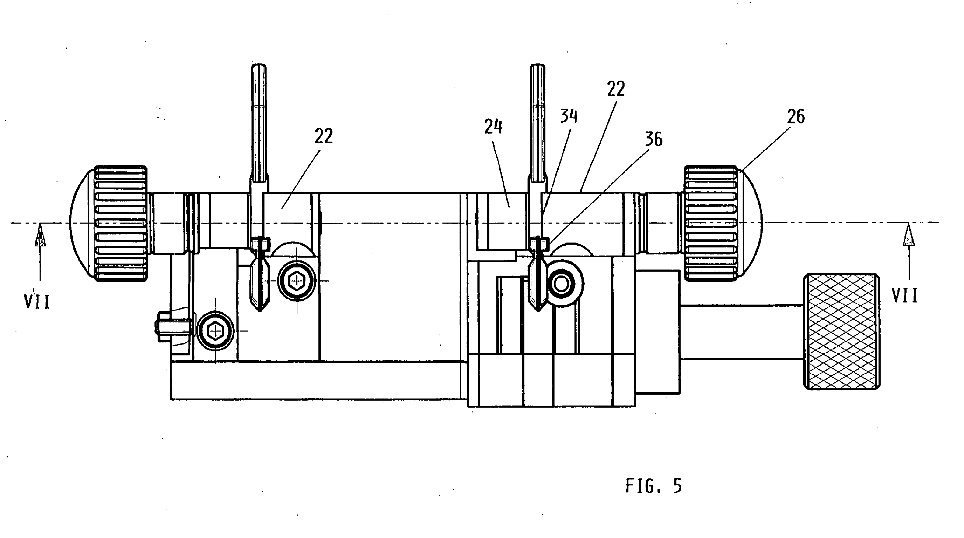

- Figure 5: is a plan view thereof,

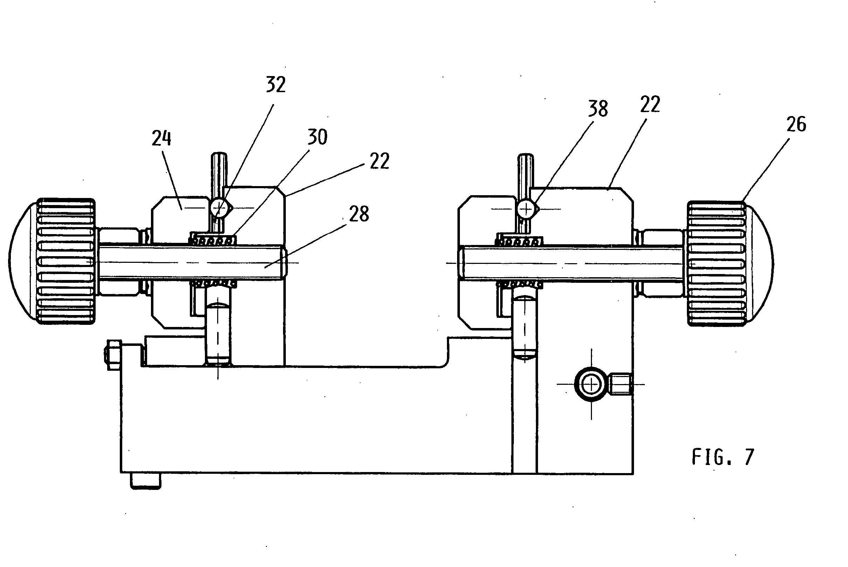

- Figure 6: is a section therethrough on the line VI-VI of Figure 4,
- Figure 7: is a section therethrough on the line VII-VII of Figure 5, and

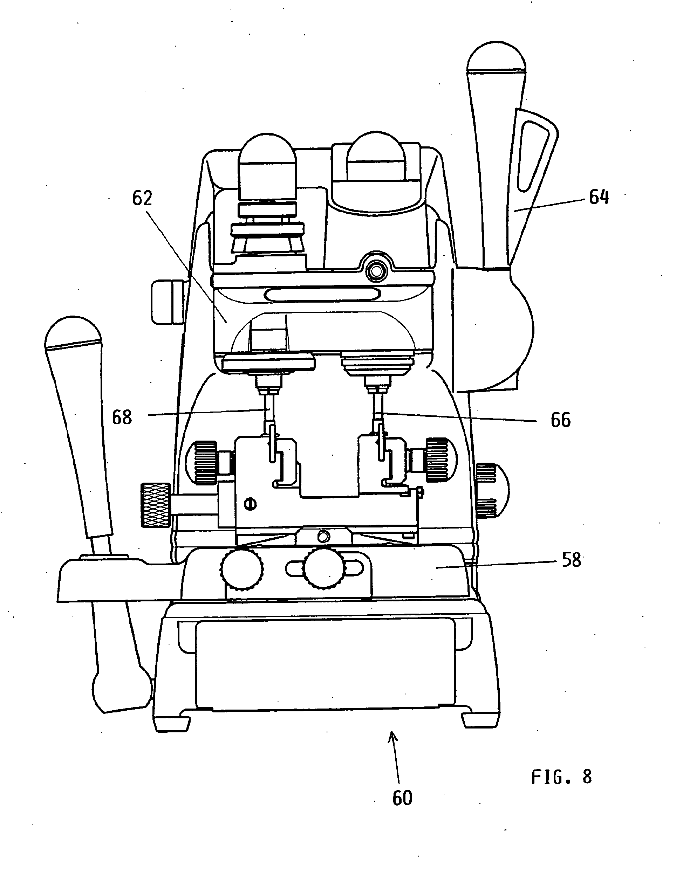

- Figure 8: shows a duplicating machine to which the clamping device of the invention is applied.

As can be seen from the figures, the clamping device of the invention comprises substantially a base 2 on which a clamp 4 for the key 6 to be duplicated and a clamp 8 for the key blank are mounted respectively.

The key 6 to be duplicated comprises substantially a shank 10, one end of which is provided with a gripping and operating head, its other end presenting a bit 14 suitable for operating a locking mechanism.

The bit 14 is substantially of rectangular parallelepiped shape with its opposing surfaces comprising a notch 16 having its axis transverse to the axis of the shank.

The notches are situated in the vicinity of an end forming the butt 18 of the bit.

Each jaw presents a U cross-section in which one of the branches is perpendicular to the longitudinal axis of the key and the other branch forms an acute angle with the key.

The base of each notch 16 extends for the entire length of the bit and in plan view presents a very open V-shape, the vertex of which is situated on the axis of the key.

The free end of the bit has a triangular tip, the surfaces of the bit comprising parallel grooves 20 of greater or lesser length intended to operate the safety lock.

Each clamp 4, 8 comprises two jaws, of which one 22 is fixed and the other 24 is movable away from and towards the fixed jaw, they being made to mutually approach by means of a knob 26 rigid with a threaded pin 28 which engages both jaws against the elastic reaction of a coil spring 30.

Each movable jaw 24 presents a substantially flat gripping surface 32, while the gripping surface 34 of each fixed jaw 22 comprises a vertical groove 36 for axially positioning the key by engaging its butt 18.

The same lateral surface comprises a horizontal V-shaped groove 38 for vertically centering and fixing the key.

In a position facing the clamp 4 of the key 6 to be duplicated, there is provided a substantially U-shaped block 40 with its cavity facing upwards and traversed by a pin 42 interfering with an eccentric member 44 operable from the outside, against the elastic reaction of a coil spring 50, by means of a knob 46 provided with reference markings 48.

Specifically, the lateral surface 52 of the eccentric member 44 is provided with a plurality of impressions 54 in which a catch 56 selectively and elastically engages, the distance between the impressions being such that as the catch 56 passes from one impression to the next, the U-shaped block 40 undergoes a vertical movement of 1 mm.

The clamping device of the invention is used in the following manner: the base 2 is fixed to the cross table 58 of a traditional key duplicating machine 60 comprising a carriage 62 which supports a feeler 66 overlying the original key and a milling cutter 68 overlying the key blank, and is provided with a lever 64 for moving it vertically relative to the clamps.

The knob 46 is then rotated to bring the U-shaped block into its minimum height position by the action of the eccentric member 44.

After the key blank and the key to be duplicated have been positioned in their respective clamps, the lever 64 is operated to position the discoidal portion 70 of the feeler 66 on the upper surface of one of the branches 72 of the U-shaped block. The cross table 58 is then operated so that the feeler moves along both surfaces of the key bit to hence sense the grooves 20 present in it at that level and reproduce them by means of the cutter 68 on the bit of the key blank. When the entire contour of the bit has been sensed at that level, the knob 56 is again operated to cause the block to rise by 1 mm and sense the grooves present in the bit at that level.

From the aforegoing it is clear that the clamping device of the invention enables keys of special bit type to be easily and comfortably produced, and with facilitated centering.

## Claims

1. A clamping device for duplicating machines for keys of special bit type, said key comprising a shank (10) provided at one end with an operating head (12) and at the other end with a substantially rectangular bit (14) provided with a notch (16) transverse to the shank axis and with a plurality of grooves (20) parallel to the shank axis, said device comprising: two clamps (4, 8), each consisting of a fixed jaw (22) and a jaw (24) movable away from and towards the fixed jaw, one gripping surface of the jaws being substantially flat,
**characterised in that** the other gripping surface of the jaws is provided with a vertical groove (36) for the insertion of that portion of the bit lying between the end of the shank and the transverse notch and a horizontal groove (38) for engagement by the shank, said device further comprising a block (40) facing the clamp of the key to be duplicated in correspondence with the bit thereof, said block defining a surrounding seat for the key bit, said block being provided with means for its vertical raising to form with its horizontal surface a support for a feeler device (66) acting on the key to be duplicated and associated with a milling cutter (68) acting on the bit of the key blank, said feeler device and said milling cutter being rigid with each other.

2. A clamping device as claimed in claim 1, **characterised in that** the block (40) is traversed by a pin (42) interfering with an eccentric member (44) operable from the outside.

3. A device as claimed in claim 2, **characterised in that** the lateral surface (52) of the eccentric member (44) presents a plurality of impressions (54) in which a catch (56) selectively and elastically engages.

4. A device as claimed in claim 3, **characterised in that** the distance between the impressions (54) is such that when the catch passes from one impression to the next, the block (40) moves through a distance corresponding to the distance between two adjacent grooves (20) of the key to be duplicated.

5. A device as claimed in claim 1, **characterised in that** the block is substantially of U-shape.

## Patentansprüche

1. Spannvorrichtung für Kopiermaschinen von Schlüsseln mit einem besonderen Barttyp, wobei der besagte Schlüssel einen Schaft (10) umfasst, der an einem Ende mit einem Betätigungskopf (12) und am anderen Ende mit einem im Wesentlichen rechteckigen Bart (14) versehen ist, der mit einer Kerbe (16) quer zur Schaftachse und mit einer Vielzahl von Nuten (20) parallel zur Schaftachse versehen ist, wobei die besagte Vorrichtung umfasst:
zwei Zwingen (4, 8), die jeweils aus einer festen Klemmbacke (22) und einer Klemmbacke (24) bestehen, die von der festen Klemmbacke weg und zu ihr hin bewegbar ist, wobei eine Greiffläche der Klemmbacken im Wesentlichen flach ist, **dadurch gekennzeichnet, dass** die andere Greiffläche der Klemmbacken mit einer senkrechten Nut (36) zum Einführen des Abschnitts des Bartes, der zwischen dem Schaftende und der Querkerbe liegt, und einer horizontalen Nut (38) zum Eingriff mit dem Schaft versehen ist, wobei die besagte Vorrichtung weiterhin einen Block (40) umfasst, der der Zwinge des zu kopierenden Schlüssels korrespondierend mit dessen Bart gegenüberliegt, wobei der besagte Block einen Umgebungssitz für den Schlüsselbart definiert, wobei der besagte Block mit Mitteln zu seiner senkrechten Anhebung versehen ist, um mit seiner horizontalen Oberfläche einen Träger für eine Fühlervorrichtung (66) zu bilden, die auf den zu kopierenden Schlüssel wirkt und einem Fräser (68) zugeordnet ist, der auf den Bart des Schlüsselrohlings wirkt, wobei die besagte Fühlervorrichtung und der besagte Fräser starr miteinander sind.

2. Spannvorrichtung nach Anspruch 1, **dadurch gekennzeichnet, dass** quer durch den Block ein Stift (42) verläuft, der mit einem exzentrischen Glied (44) zusammenwirkt, das von außen betätigbar ist.

3. Vorrichtung nach Anspruch 2, **dadurch gekennzeichnet, dass** die Seitenfläche (52) des exzentrischen Gliedes (44) eine Vielzahl von Vertiefungen (54) aufweist, in die ein Sperrorgan (56) wahlweise und elastisch eingreift.

4. Vorrichtung nach Anspruch 3, **dadurch gekennzeichnet, dass** der Abstand zwischen den Vertiefungen (54) derart ist, dass, wenn das Sperrorgan von einer Vertiefung zur nächsten passiert, der Block (40) sich in einem Abstand bewegt, der dem Abstand zwischen zwei benachbarten Nuten (20) des zu kopierenden Schlüssels entspricht.

5. Vorrichtung nach Anspruch 1, **dadurch gekennzeichnet, dass** der Block im Wesentlichen eine U-Form aufweist.

## Revendications

1. Dispositif de serrage pour des machines à copier des clés de type à panneton spécial, ladite clé comprenant une tige (10) munie à une extrémité d'une tête d'actionnement (12) et à l'autre extrémité d'un panneton sensiblement rectangulaire (14) muni d'une encoche (16) transversale à l'axe de la tige et de plusieurs rainures (20) parallèles à l'axe de la tige, ledit dispositif comprenant deux étaux (4, 8) consistant chacun en une mâchoire fixe (22) et une mâchoire (24) mobile depuis et vers la mâchoire fixe, une surface de prise des mâchoires étant sensiblement plate,
**caractérisé en ce que** l'autre surface de prise des mâchoires est munie d'une rainure verticale (36) pour l'insertion de cette partie du panneton s'étendant entre l'extrémité de la tige et l'encoche transversale et d'une rainure horizontale (38) pour s'engager avec la tige, ledit dispositif comprenant en outre un bloc (40) faisant face à l'étau de la clé à copier en correspondance avec le panneton de celle-ci, ledit bloc définissant un siège environnant pour le panneton de clé, ledit bloc étant muni de moyens pour son élévation verticale pour former avec sa surface horizontale un support pour un dispositif de palpeur (66) agissant sur la clé à copier et associé avec une fraise à rainer (68) agissant sur le panneton de la clé brute, ledit dispositif palpeur et ladite fraise à rainer étant solidaires l'un à l'autre.

2. Dispositif de serrage comme revendiqué dans la revendication 1, **caractérisé en ce que** le bloc (40) est traversé par une goupille (42) interférant avec un élément excentrique (44) actionnable de l'extérieur.

3. Dispositif comme revendiqué dans la revendication 2, **caractérisé en ce que** la surface latérale (52) de l'élément excentrique (44) présente plusieurs empreintes (54) dans lesquelles un mentonnet (56) s'engage de manière sélective et élastique.

4. Dispositif comme revendiqué dans la revendication 3, **caractérisé en ce que** la distance entre les empreintes (54) est telle que lorsque le mentonnet passe d'une empreinte à la suivante, le bloc (40) se déplace d'une distance correspondant à la distance entre deux rainures adjacentes (20) de la clé à copier.

5. Dispositif comme revendiqué dans la revendication 1, **caractérisé en ce que** le bloc est sensiblement en forme de U.
